# EUROPEAN PATENT APPLICATION

(11) **EP 3 855 385 A1**
(43) Date of publication of application: **28.07.2021**
(21) Application number: 20152928.6
(22) Date of filing: 21.01.2020
(51) Int. Cl.: G06Q 40/04, G06Q 30/08, G06Q 50/06

(54) **COMPUTER-IMPLEMENTED METHOD FOR DETERMINING A FLOW OF A RESOURCE OF A RESOURCE NETWORK AND NETWORK FLOW SELECTION COMPONENT**

(71) Applicant: Siemens Aktiengesellschaft, 80333 München (DE)
(72) Inventor: Sauer, Markus, 81739 München (DE); Zupan, Nejc, 80337 München (DE)

(57) **Abstract**

The computer-implemented method is a method for determining a flow of at least one resource from one or more components offering the resource via offer signals to one or more components requesting the resource via request signals. In the computer-implemented method, the offer signals and request signals are recorded and with some or all of the offering or requesting components, respectively, a performance criterion for the entirety of the flow of the resource in the resource network is agreed and at least one or one or two or more candidates for the entirety of the flow from offering components to requesting components are consulted and that candidate is determined on the basis of the offer signals and the request signals, whose flow satisfies an optimum of the performance criterion.

The network flow selection component is configured to conduct this method.

## Description

This invention relates to a computer-implemented method for determining a flow of at least one resource from one or more components of a resource network offering the resource to one or more components requesting the resource. This invention also relates to a network flow selection component of the resource network.

In microgrids and areas with a lot of dynamic and decentralized energy, electrical infrastructure can be easily become saturated since the dynamic generation of energy, e.g. using solar panels and wind turbines, and the dynamic consumption of energy, e.g. by electric vehicle charging, can lead to peaks in the generation or consumption. These peaks are commonly linked to environmental and human behavior variables such as weather or daily patterns of household usage.

In order to increase the local usage of locally produced energy and in order to minimize long distance redispatch of electricity, local energy marketplaces have been introduced. Such local energy marketplaces enable new business models for involved stakeholders and enable individual participants in an energy system to actively participate and contribute to this business ecosystem.

From a technical implementation perspective of this business ecosystem, however, a single local energy marketplace may introduce a biased trading ground operated by a single third party.

This issue may be addressed in principle by decentralizing the operation of the marketplace by applying blockchain technology and realizing the marketplace as smart contracts. The complexity of necessary solvers for the optimization problem of clearing a marketplace, however, is by orders of magnitude to high compared to what is possible with current blockchain technology. Furthermore, executing computationally intense optimization problem solvers on each blockchain node of a blockchain network makes no sense in terms of computational costs.

Similar problems may arise for other kinds of resource networks.

Thus, it is a problem of the present invention to provide an improved method for determining a flow of a resource in a resource network. Particularly, it is a problem of the current invention to enable an operation of a local resource network without the issue of a bias introduced by a single party participating in the resource network. In addition, it is a problem of the present invention to provide a network flow selection component that enables the conduction of this improved method.

These problems of the present invention are solved by a computer-implemented method with the features as listed in claim 1 and by a network flow selection component with the features as listed in claim 8. Preferred aspects of the present invention are subject of the respective dependent claims, the description following below and the drawing.

The computer-implemented method according to the invention is a computer-implemented method for determining a flow of at least one resource from one or more components offering the resource via offer signals to one or more components requesting the resource via request signals. In the computer-implemented method according to the invention, the offer signals and request signals are recorded and with some or all of the offering or requesting components, respectively, a performance criterion for the entirety of the flow of the resource in the resource network is agreed and at least one, preferably at least two or more candidates for the entirety of the flow from offering components to requesting components are consulted and that candidate is determined based on the offer signals and the request signals, whose flow satisfies an optimum of the performance criterion.

It is understood that the term "resource network" preferably refers to a network of components that offer the resource and of components that request the resource.

Advantageously, the method may be conducted on a decentralized platform with a performance criterion which may alternatively be called solution key performance indicator or "solution KPI" throughout this application. This performance criterion defines the strategy that is agreed upon by the components of the resource network, particularly participants in the network such as consumers of the resource, providers of the resource or prosumers (i.e. components acting both as providers and consumers) of the resource participating in the resource network. These components of the network, e.g. a microgrid establishing a local marketplace, may publish requests and offers to other components across the resource network. Requests and offers represent a forecasted amount of the resource these components would like to provide or forecasted amounts of the resource that the components would like to request at a certain point in time.

As a particular advantage of the method according to the invention, one or multiple marketplace solvers, establishing generators for candidates for the entirety of the flow of the resource, may compete with each other. These generators may provide their candidates based on the offer signals and request signals and their implemented optimization algorithm. Candidates may be optimized for different strategies, such as the locality of the consumption of the resource or the network stability of the resource network or a grid stability of a grid that may realize the resource network or a minimized network saturation of the resource network. The method according to the invention may comprise submitting the candidate to a decentralized clearing platform. The decentralized platform may determine the candidate from all submitted or alternatively generated candidates based on the performance criterion, preferably for a specific timeframe defined by one or more components of the resource network.

Since in principle more candidates by different parties can be contributed to the method according to the invention, the resource network can respond more dynamically to requests and offers within the resource network since different optimization strategies may be used for the generation of candidates. The resource network may become more robust accordingly.

The computer-implemented method according to the invention addresses the problem of potentially biased local resource marketplaces and enables a decentralized production and consumption clearing and approval infrastructure. The computer-implemented method according to the invention allows all participating components of the resource network to govern the determination of the entirety of the flow of the resource from offering components to requesting components by a community-established performance criterion that forms the basis of the determination of the flow of the resource. Since the participating network components of the resource network agree on the performance criterion, the flow of the resource is determined according to the preferences of all components in a basically unbiased manner.

In a preferred aspect of the method according to the invention, the at least one candidate is, preferably the at least two candidates are, particularly respectively, received from one or more components.

In this advantageous aspect of the method according to the invention, the components of the resource network are not only able to agree on a performance criterion, but components are also able to provide a candidate for the entirety of the flow of the resource in the resource network. Thus in case of a presumably biased candidate generation during the determination of the flow of the resource, components may decide to provide a candidate themselves, so the risk of a biased provision of the candidate is eliminated to the extent that the candidates provided by the components of the resource network satisfy the performance criterion better than any allegedly biasedly generated candidate.

Preferably, in another advantageous aspect of the method according to the invention, the resource comprises energy and/or data and/or material and/or machine tasks and/or machine capacity, particularly machine time, and/or the resource network comprises an energy network and/or a data network and/or a machine task network and/or a material network. Particularly energy networks and data networks and machine task networks are at risk to be affected by a biased determination of the resource flow in a resource network. Advantageously, the method according to the invention provides an easy and automized way to reduce any potential bias of a resource flow determination, so that an efficient resource generation and consumption would be not be affected by any single party bias.

In a preferred aspect of the method according to the invention, the performance criterion comprises a measure for the distance of an energy transport and/or a measure for a data latency and/or a measure for a production time and/or a measure for a production quality and/or a measure for a machine utilization level.

Preferably, in another advantageous aspect, the method according to the invention comprises transmitting the at least one, preferably at least two or all, candidates to one or more, preferably all, components of the resource network. This candidate transmission to the components of the resource network ensures a maximum transparency within the resource network that additionally contributes to minimize any bias in the resource flow determination. This aspect of the invention makes use of the fact that the generation of a suitable candidate for the entirety of the resource flow may be computationally complex in a general case. However, using the performance criterion to confirm that a specific candidate among a set of several candidates optimizes the performance criterion is a computationally way easier task. Hence, while the candidate generation is a complex task, the easily computable candidate confirmation can in principle be done by any component of the resource network with a minimum of computational capabilities. Thus, a flow determination can be transparently cross-checked by each component participating in the resource network, so that any biased determination of the flow may be easily noticed by the components of the resource network and appropriate means may be taken in order to eliminate this bias.

In other words, this approach benefits from the fact that optimal candidates optimizing the performance criterion can be easily verified, but the calculation of an optimal solution for specific performance criteria may be computationally extremely complex. Thus, the method according to the aforementioned aspect of the invention enables a hybrid decentralization approach where the validation of a candidate, and the selection of the candidate may be realized in a decentralized and distributed manner without any third-party bias and whereas the computational intensive generation of an optimal candidate may be done by a single component of the resource network.

Because of the transparency of candidate determination and the agreement of the performance criteria, candidates can also be generated by third parties not necessarily being part of the resource network. Thus, the method according to the invention enables a modular administration of the resource network.

In an advantageous aspect of the invention, the method comprises determining the at least one candidate on the basis of the offer signals and request signals using a computer-implemented optimization algorithm and/or a particle filter and/or artificial intelligence and/or using at least one neuronal network and/or a self-learning system. These methods advantageously offer an efficient generation of useful candidates for this generally computationally complex problem.

In another preferred aspect of the invention the method comprises realizing the offer signals and/or request signals and/or the resource network using a distributed database, particularly a blockchain, and/or via a smart contract or via smart contracts.

The network flow selection component according to the invention is configured for conducting the computer-implemented method as described above. Furthermore, the network flow selection component is configured to receive a performance criterion and two or more candidates from components of the resource network and to determine the candidate whose entirety of the flow of the resource optimizes the performance criterion.

In a preferred aspect of the invention, the network flow selection component is configured to transmit the determined candidate to one or more components of the resource network.

Preferably, the network flow selection component is configured to transmit also the at least one or one or more, preferably all, additional candidates to one or more, preferably all, components of the resource network.

In the following, the invention is described based on the drawing.

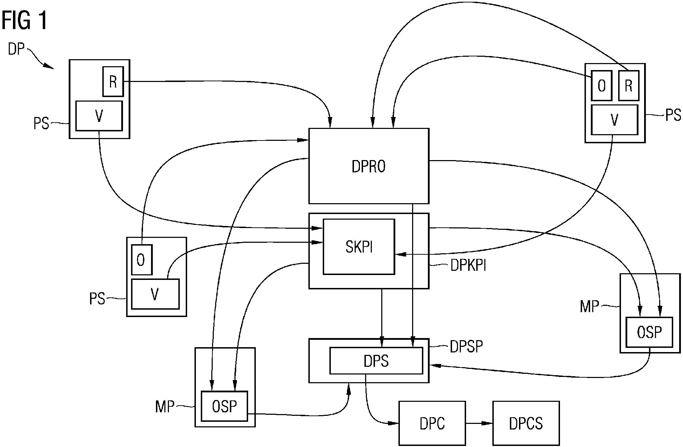

The sole drawing figure 1 schematically shows a resource network with multiple components and a network flow selection component according to the invention implementing the computer-implemented method according to the invention.

The depicted resource network represents an energy microgrid that establishes a local energy marketplace and is referred to as a decentralized platform DP throughout the description of this embodiment. Accordingly, the resource whose flow is to be determined across the resource network is energy. In other embodiments that are not specifically shown in the drawing, the resource network may be a data network or material network such as a water network. The decentralized platform DP consists of resource providing components and resource requesting. The resource providing components offer the resource using offer signals O whereas the resource requesting components request the resource with request signals R. The individual components may thus be providers or consumers or both providers and consumers of the resource and all of the aforementioned components are briefly labelled as providers and/or consumers and/or prosumers PS in what follows.

The prosumers PS agree on a performance criterion, briefly denoted as a *"solution key performance indicator"* or briefly a *"solution KPI"* SKPI by a specific agreement process, in this specific embodiment by voting with votes V. In further embodiments, other agreement processes are possible. The solution KPI SKPI is generally applicable in this embodiment throughout the operation of the resource network. In further, not specifically shown, embodiments, the solution SKPI are individually agreed on for specific time periods.

The solution KPI SKPI agreed on by all prosumers PS are stored in the decentralized platform DP. The decentralized platform DP comprises a KPI management and storage module DPKPI that stores the solution KPI in an immutable way. In other words, altering of the solution KPI is only possible through an agreed process of all providers and/or consumers and/or prosumers PS through a particular agreement process such as voting. Each component of the resource network, particularly providers and/or consumers and/or prosumers PS and marketplace components MP as described below can read the currently valid solution KPI SKPI from the decentralized platform DP.

All providers and/or consumers and/or prosumers PS submit offers and requests to the decentralized platform DP. The decentralized platform DP interprets and stores them immutable in an offers and requests database DPRO of the decentralized database DP.

The prosumers PS and additionally other network components, in this embodiment labelled as marketplace components MP, may also read from the decentralized platform DP.

The marketplace components MP are configured to calculate their candidate for an entirety of the flow of the resource in the resource network matching the offers due to the offer signals O and the requests due to the request signals R. The candidate for the flow of the resource is called an optimization solution proposal OSP throughout the description of this embodiment. The marketplace components MP generate the optimization solution proposal OSP using marketplace optimization solvers MPOS with their respective algorithm parametrized with the currently valid solution KPI SKPI.

Each marketplace component MP provides its own optimization solution proposal OSP to the decentralized platform DP, which stores it in a solution proposal management and storage module DPSP. In this particular embodiment, it is not necessary that all requests and offers are already submitted to the decentralized platform DP during generation of an optimization solution proposal OSP. The respective time frame for generation of an optimization solution proposal OSP and the submission of the proposal may be defined by an individual strategy of the marketplace component MP instead. Marketplace components MP might even be able to override submitted optimization solution proposals OSP for time periods, that have not been already cleared.

The decentralized platform DP contains a trigger for clearing the flow of resources for a certain time period according to certain trigger rules of the decentralized platform DP, for example triggering after a certain time interval has passed. When receiving the trigger, a validation module integrated into the solution proposal management and storage module DPSP of the decentralized platform DP retrieves all optimized solution proposals OSP and offers O and requests R for this time period and validates all optimization solution proposals OSP and forwards all valid optimization solution proposals OSP to a selection module DPS of the solution proposal management and storage module DPSP.

The selection module DPS calculates the solution KPI SKPI for each optimized solution proposal OSP based on the optimized solution proposals OSP and the respective offers and requests. The selection module DPS selects the winning optimization solution proposal OSP provided by marketplace component MP according to the solution KPI SKPI according to a previously fixed algorithm, in this embodiment the highest solution KPI SKPI for each time slice of the triggered clearance time period. These optimization solution proposals OSP are forwarded to a clearing module DPC of the decentralized platform DP by the selection module DPS.

The selection module DPS establishes the network flow selection component according to the invention.

The clearing module DPC takes the selected optimization solution proposals OSP and clears all offers and requests BO accordingly and stores the result into a cleared solution management and storage module DPCS of the decentralized platform DP. The results stored in this cleared solution management and storage module DPCS may be regarded as the actual contractual agreement between the prosumers PS as a result of the previously agreed solution KPI jointly agreed by the prosumers PS.

In another embodiment, that for the remaining aspects equals to the embodiment as described above, the decentralized platform DP can be realized by the means of a distributed and decentralized database, for example a blockchain.

In another embodiment, that for the remaining aspects equals to the embodiment as described above, the solution KPI SKPI may be realized with procedures agreed on by all participants such as smart contracts.

In another embodiment, that for the remaining aspects equals to the embodiment as described above, existing solution KPI SKPI can be adapted or a new solution KPI SKPI can be introduced, once agreed upon by the respective components of the resource network. For example, an agreement can be reached through a voting process which involves all network components that will be affected by this Solution KPI SKPI or which have already agreed on the previously valid SKPI.

Optionally, in any of the embodiments described above, the voting process can be a weighted voting process. E.g. the voting process for changes can be weighted, for example according to the volume of the flow affecting the voting component or any network credits affecting the voting component in the resource network.

Optionally, in any of the embodiments described above, the marketplace component MP may be a part of the decentralized platform DP. E.g. the marketplace component MP may be realized together with the decentralized platform DP as a part of the same blockchain or as parts of separate blockchains. Of course, also one of the elements of the group of marketplace component and the decentralized platform may be realized with a blockchain and the other element of the group may be realized with or without a blockchain.

Optionally, in any of the embodiments described above, prosumers PS may pay an incentive/bonus to the marketplace component MP, if its optimization solution proposal is selected by the selection module DPS. This incentive can e.g. be fixed in relation to a difference of the solution KPI SKPI to the KPI of the next best optimized solution proposal OSP. Incentivization may enhance the motivation of marketplace components MP to provide optimized solution proposals OSP.

Optionally in any of the above embodiments marketplace optimization solvers may be used based on optimization algorithms such as particle filters and/or artificial intelligence and/or self-learning systems and/or even by one or more human beings.

Optionally, in any of the embodiments described above, the marketplace component MP is configured to optimize its algorithm by training with previously received clearing results.

## Claims

1. Computer-implemented method for determining a flow of at least one resource from one or more components (PS) offering the resource via offer signals (0) to one or more components requesting the resource via request signals (R) of a resource network, the method comprising: recording the offer signals and request signals (DPRO); agreeing with some or all of the offering or requesting components (PS), respectively, a performance criterion (SKPI) for the entirety of the flow of the resource in the resource network; and consulting at least one, preferably at least two or more, candidate/s (OSP) for the entirety of the flow from offering components (PS) to request components (PS) and determining that candidate (OSP) on the basis of the offer signals (O) and the request signals (R), whose flow satisfies an optimum of the performance criterion (SKPI).

2. Computer-implemented method according to the previous claim, the method comprising: receiving the at least one candidate (OSP), preferably the at least two candidates (OSP), particularly respectively, from one or more components (PS).

3. Computer-implemented method according to one of the preceding claims, the resource comprising energy and/or data and/or machine tasks and/or machine capacity, particularly machine time, and/or material and/or the resource network comprising an energy network and/or a data network and/or a material network and/or a machine task network.

4. Computer-implemented method according to one of the preceding claims, the performance criterion (SKPI) comprising a measure for the distance of an energy transport and/or a measure for a data latency and/or a measure for a production time and/or a measure for a production quality and/or a measure for a machine utilization level.

5. Computer-implemented method according to one of the preceding claims, the method comprising transmitting the at least one, preferably at least two or all, candidates (OSP) to one or more, preferably all, components (PS) of the resource network.

6. Computer-implemented method according to one of the preceding claims, the method comprising determining the at least candidate (OSP) on the basis of the offer signals (O) and request signals (R) using a computer-implemented optimization algorithm and/or a particle filter and/or artificial intelligence and/or using at least one neuronal network and/or a self-learning system.

7. Computer-implemented method according to one of the preceding claims, the method comprising realising the offer signals (O) and/or request signals (R) and/or the resource network (DP) using a distributed database, particularly via a blockchain, and/or via a smart grid.

8. Network flow selection component for conducting the computer-implemented method according to one of the preceding claims, the network flow selection component (PS) being configured to receive a performance criterion (SKPI) and two or more candidates (OSP) from components (PS) of the resource network (DP) and to determine the candidate (OSP) whose entirety of the flow of the resource optimizes the performance criterion (SKPI).

9. Network flow selection component according to one of the preceding claims, the network flow selection component (PS) being configured to transmit the entirety of the flow of the determined candidate (OPS) to one or more components (PS) of the resource network.

10. Network flow selection component according to one of the preceding claims, the network flow selection component (PS) being configured to transmit the at least one or one or more, preferably all, candidates (OSP) to one or more, preferably all, components (PS) of the resource network (DP).
